# FASCICULE DE BREVET EUROPEEN

(11) **EP 3 857 283 B1**
(45) Date de publication et mention de la délivrance du brevet: **13.05.2026**
(21) Numéro de dépôt: 19773847.9
(22) Date de dépôt: 26.09.2019
(51) Int. Cl.: G02B 19/00, F21V 5/00, G02B 13/16, F21S 41/143, F21S 41/151, F21S 41/265, F21Y 115/10

(54) **SYSTÈME OPTIQUE DE PROJECTION ET MODULE LUMINEUX POUR VÉHICULE**
OPTISCHES PROJEKTIONSSYSTEM UND LEUCHTMODUL FÜR EIN FAHRZEUG
PROJECTING OPTICAL SYSTEM AND LUMINOUS MODULE FOR A VEHICLE

(30) Priorité: 27.09.2018 FR 1858923
(43) Date de publication de la demande: 04.08.2021
(73) Titulaire: Valeo Vision, 93012 Bobigny Cedex (FR)
(72) Inventeur: ALBOU, Pierre, 93012 BOBIGNY Cedex (FR)
(74) Mandataire: Valeo Visibility
(86) Numéro de dépôt international: PCT/EP2019/076107
(87) Numéro de publication internationale: WO 2020/064964

(56) Documents cités:
- DE-A1- 102014 217 521
- FR-A1- 3 044 743
- US-A1- 2003 112 525
- US-A1- 2004 105 172
- "Modern Lens Design", 1 January 1992, MCGRAW-HILL, INC, ISBN: 978-0-07-059178-3, article WARREN J. SMITH: "Modern Lens Design", pages: 25 - 27, XP055152035

## Description

La présente invention est relative notamment à un système optique de projection et à un module d'éclairage pour véhicule.

Une application préférée concerne l'industrie automobile, pour l'équipement de véhicules, en particulier pour la réalisation de dispositifs susceptibles d'émettre des faisceaux lumineux, encore appelés fonctions d'éclairage et/ou de signalisation, répondant en général à des réglementations. Par exemple, l'invention peut permettre la production d'un faisceau lumineux de type segmenté, notamment pour la participation à des fonctions d'éclairage à l'avant d'un véhicule et/ou éventuellement une signalisation. En particulier, l'invention peut permettre de générer un faisceau de complément route (associé avec un faisceau de base totalement ou pour le moins majoritairement projeté en dessous d'une ligne horizontale de coupure du type utilisé pour la fonction de feu de croisement, le faisceau de complément route s'additionnant au faisceau de base de sorte à le compléter au-dessus de la ligne de coupure ; avantageusement, ce faisceau de complément route est adaptatif pour allumer ou éteindre certaines parties du faisceau global projeté, par exemple pour des fonctions anti éblouissement.

Les feux de signalisation et/ou d'éclairage de véhicules automobiles, sont des dispositifs lumineux qui comprennent une ou plusieurs sources de lumière et une glace qui ferme le feu. De façon simplifiée, la source lumineuse émet des rayons lumineux pour former un faisceau lumineux qui est dirigé vers la glace qui transmet la lumière à l'extérieur du véhicule. Ces fonctions doivent répondre à des réglementations, en matière d'intensité lumineuse et d'angles de visibilité notamment.

Les modules d'éclairage connus sont jusqu'à présent prévus pour émettre de la lumière remplissant une fonction d'éclairage, par exemple :
- un faisceau de croisement, majoritairement dirigé vers le bas (il y a généralement des parties minoritaires du faisceau qui sont montantes et qui éclairent au-dessus de l'horizon), encore parfois appelé faisceau de code et utilisé en cas de présence d'autres véhicules sur la chaussée ;
- un faisceau de route dépourvu de coupure, et caractérisé par un éclairement maximal dans l'axe du véhicule ;
- un faisceau d'éclairage pour temps de brouillard, caractérisé par une coupure plate et une grande largeur d'éclairement.

Ces fonctions concernent typiquement une projection vers l'avant.

Récemment, on a développé des technologies permettant de produire un faisceau segmenté, aussi appelé pixélisé, pour réaliser des fonctions d'éclairage adaptatif notamment, tel que ceux exposés dans le règlement UNECE 123. C'est notamment le cas pour une fonction d'éclairage de type « complément route » généralement basée sur une pluralité d'unités d'illumination comportant chacune une diode électroluminescente, diodes qui peuvent être pilotées individuellement. Le faisceau, résultant des différents segments de faisceau issus de chacune des diodes, est projeté au moyen d'un système optique de projection comprenant généralement une ou plusieurs lentilles.

Dans la présente description, on appelle faisceau segmenté un faisceau dont la projection forme une image composée de segments de faisceau, chaque segment pouvant être allumé de manière indépendante. On peut employer une source de lumière pixélisée pour former ces segments.

Dans certains cas, notamment dans des applications d'écriture au sol, recourant à des matrices de micro-miroir (DMD), le nombre de pixels est particulièrement élevé (plus de 100 000 pixels) et le système optique de projection ne nécessite pas une grande ouverture numérique. Toutefois, le recours à des technologies à haute résolution (plus de 100 000 pixels) a un impact fort sur le coût final du système d'éclairage. Dans le but de réaliser un faisceau d'éclairage pixélisé avec fonction non éblouissante sur un champ important, il est souhaitable que l'ouverture numérique soit large. Dans le même temps, l'ouverture importante ne doit pas pénaliser la qualité du faisceau émis, notamment en termes d'aberration chromatique.

La présente invention vise à remédier au moins en partie à ce problème.

Il est connu du document US2003/0112525 un système de projection ciématographique dont l'objectif de projection comporte un ensemble de lentille formant une structure dite de double Gauss, précédé en amont d'une lentille de champ et associée en aval à un doublet de lentille de type Fraunhofer. Toutefois ce système a une faible ouverture (1 :1, 9 ou f/1,9) et présente un encombrement important (entre 100 et 400 mm) ce qui entraine une faible efficacité en flux et des difficultés d'intégration mécanique dans l'hypothèse d'une application à l'éclairage automobile. L'invention vise à fournir un système optique efficace et compact pour des modules d'éclairage automobile.

L'invention est définie par les revendications.

Grâce à la combinaison de lentilles de l'invention, le système optique assure une ouverture numérique importante, c'est-à-dire avec un nombre d'ouverture N<1. Notamment, le groupe optique d'entrée a une fonction de lentille de champ permettant d'accroître cette ouverture. En outre, la pluralité de lentilles autorise une sélection fine des matériaux employés, tels que des verres, en particulier pour régler des corrections du chromatisme ; le contrôle du chromatisme est en particulier important pour des applications liées aux faisceaux de type adaptatif pour lesquels le contraste dans le faisceau est élevé (entre des zones éclairées et des zones non éclairées). De plus, cette combinaison de lentille assure une compacité du système optique, avantageusement de moins de 75 mm selon l'axe optique. Enfin, cette combinaison de lentille a pour avantage que la pupille de sortie du système est située sur le dernier dioptre et ne nécessite donc pas de diaphragme

Dans un cas préféré, le module d'éclairage participe à des fonctions de faisceau code ou feu de croisement. Cela peut se faire grâce à une bande de superposition employée pour une homogénéité correcte, soit au moins 1° en dessous de la coupure horizontale du faisceau code (notamment le module peut participer ou réaliser la formation de la partie du faisceau code située au-dessus du niveau de la coupure horizontale (dans ce cas il n'y a pas nécessairement de module code additionnel proprement dit, mais un simple module à coupure plate) ou d'un faisceau de classe E tel que défini dans le règlement UNECE 123, version en vigueur à la date de dépôt de la présente demande.

Alternativement, la fonction d'éclairage peut être une fonction de complément de feu de route servant à participer à un feu de route en combinaison avec un module de base, par exemple utilisé pour la fonction de feu de croisement.

Selon un autre aspect, la présente invention concerne également un module comprenant une source lumineuse associée à un système optique de projection selon l'invention et qui est configuré pour produire un faisceau lumineux de sortie, émis par un dioptre de sortie du groupe optique de sortie, à partir de lumière issue de l'au moins une source lumineuse et entrant directement dans le système optique de projection.

Suivant une possibilité non revendiquée, un véhicule est équipé d'au moins un module selon la présente invention. Eventuellement on peut utiliser un dispositif composé de deux modules espacés latéralement à l'avant du véhicule. Suivant une autre possibilité, on utilise deux modules disposés dans un seul projecteur, c'est-à-dire dans un seul corps de projecteur et avec une vitre de fermeture unique. Dans ce contexte, les deux systèmes optiques de projection peuvent être décalés latéralement, par exemple d'une distance correspondant à l'écartement entre deux sources lumineuses d'un module.

Suivant l'invention, le groupe optique d'entrée consiste en une lentille pourvue d'un dioptre d'entrée asphérique ou d'un dioptre de sortie asphérique. Cela remplit la fonction de lentille de champ tout en permettant de corriger de manière spécifique les aberrations aux bords du champ.

Dans une alternative de l'invention, le groupe optique d'entrée consiste en deux lentilles sphériques. Cela permet d'obtenir un résultat équivalent au cas précédent, avec des lentilles, certes plus nombreuses, mais de fabrication plus facile.

Optionnellement, le dioptre d'entrée du groupe optique d'entrée est convexe.

De préférence, les types de verre utilisés pour au moins l'un des groupes optique sont différents de sorte à compenser des problèmes de chromatisme. En particulier, on peut alterner les lentilles en verre Flint et les lentilles en verre Crown ; cela peut se faire en utilisant des doublets à base de deux lentilles chacune dans l'un de ces types de verre, de sorte à réaliser des doublets achromatiques. Avantageusement, les verres Flint et Crown sont alternés suivants le trajet des rayons lumineux, sur l'ensemble du système optique.

Suivant une possibilité, au moins la lentille de sortie du système optique (typiquement la quatrième lentille), est en verre Crown.

Dans un mode de réalisation, le module de l'invention comprend une pluralité de sources lumineuses, ces sources étant espacées l'une de l'autre transversalement à l'axe optique du système optique de projection, vis-à-vis duquel elles sont de préférence symétriques.

Suivant un aspect non limitatif, le module est configuré pour que la netteté maximale du faisceau projeté ne soit pas centrée, et de préférence soit située entre le milieu et les deux tiers d'un secteur angulaire de projection horizontale au niveau de l'axe optique. Cela correspond au fait que les rayons de courbure sont choisis de sorte que la réponse percussionnelle, mesurée sous forme d'un rayon moyen (de préférence en utilisant une moyenne quadratique du type RMS) du spot, ait un minimum situé dans le champ hors de l'axe (entre le milieu et les deux tiers du champ).

Avantageusement, les options suivantes peuvent aussi être mises en œuvre alternativement ou suivant toute combinaison entre elles :
- le dioptre d'entrée du groupe optique d'entrée est convexe vu de la source.
- la première lentille est une lentille ménisque dont le dioptre concave est tourné à l'opposé de la deuxième lentille.
- le dioptre d'entrée de la deuxième lentille est convexe, concave ou plan ; ainsi la deuxième lentille peut être une lentille biconvexe, ou une lentille plan convexe dont le dioptre plan est tourné vers la première lentille ou une lentille concave convexe dont le dioptre concave est tourné vers la première lentille, ou encore la deuxième lentille est un ménisque;
- de préférence, le dioptre d'entrée de la deuxième lentille présente un rayon de courbure plus grand que celui du dioptre de sortie de la deuxième lentille; par exemple le rapport des rayons de courbure peut être supérieur à 5. Le plus grand rayon peut être de 163mm et le plus petit de 30mm.
- la troisième lentille est une lentille ménisque de concavité tournée vers la quatrième lentille.
- la quatrième lentille est une lentille biconvexe, ou une lentille plan convexe dont le dioptre plan est tourné vers la troisième lentille.
- la première lentille est en verre Flint.
- la deuxième lentille est en verre Crown.
- la troisième lentille est en verre Flint.
- la quatrième lentille est en verre Crown.
- les lentilles du groupe optique intermédiaire et du groupe optique de sortie présentent toutes des dioptres sphériques ; le terme sphérique s'entend comme couvrant aussi des rayons de courbure infinis, c'est-à-dire des surfaces de lentilles de forme plane ;
- au moins une lentille est formée par l'association de deux sous-lentilles assemblées, notamment par collage ;
- les groupes optique peuvent se suivre en étant séparés par un espace d'air ;
- le groupe d'entrée est une lentille en verre Crown ;
- alternativement au cas précédent, le groupe d'entrée comprend une lentille amont en verre Flint suivi directement par une lentille aval en verre Crown ;
- au moins une source lumineuse est une source de lumière pixélisée, telle une puce LED monolithique ;
- le faisceau lumineux est projeté directement sur la route ;
- le faisceau lumineux est configuré pour éclairer majoritairement voire en totalité au-dessus d'une ligne de coupure horizontale ;
- le faisceau est appliqué à une fonction d'éclairage de route pour la réaliser complètement ou en complément d'un autre faisceau, par exemple un faisceau de base sous la ligne d'horizon; cette fonction est possiblement du type faisceau de route adaptatif.

Dans un mode de réalisation préféré, le module est configuré pour projeter à l'avant d'un véhicule automobile.

D'autres caractéristiques et avantages de la présente invention seront mieux compris à l'aide de la description exemplaire et des dessins parmi lesquels :
- la figure 1 montre une représentation schématique d'un module de l'invention, dans un mode de réalisation à deux sources lumineuses ;
- la figure 2 illustre un premier mode de réalisation avec une sélection de lentilles pour le système de projection ;
- la figure 3 montre une variante aux modes de réalisation de la figure 2.

Sauf indication spécifique du contraire, des caractéristiques techniques décrites en détail pour un mode de réalisation donné peuvent être combinées à des caractéristiques techniques décrites dans le contexte d'autres modes de réalisation décrits à titre exemplaire et non limitatif.

Dans les caractéristiques exposées ci-après, les termes relatifs à la verticalité, l'horizontalité et à la transversalité (ou encore direction latérale), ou leurs équivalents, s'entendent par rapport à la position dans laquelle le module d'éclairage est destiné à être monté dans un véhicule. Les termes « vertical » et « horizontal » sont utilisés dans la présente description pour désigner des directions, suivant une orientation perpendiculaire au plan de l'horizon pour le terme « vertical » (qui correspond à la hauteur des modules), et suivant une orientation parallèle au plan de l'horizon pour le terme « horizontal ». Elles sont à considérer dans les conditions de fonctionnement du dispositif dans un véhicule. L'emploi de ces mots ne signifie pas que de légères variations autour des directions verticale et horizontale soient exclues de l'invention. Par exemple, une inclinaison relativement à ces directions de l'ordre de + ou - 10° est ici considérée comme une variation mineure autour des deux directions privilégiées. Par rapport au plan horizontal, l'inclinaison est en principe comprise entre -5° et +4° et elle est comprise entre -6° et +7.5° latéralement.

Le système optique de l'invention comprend une pluralité de lentilles. Par convention, elles sont repérées sur les dessins avec des numéros de référence croissants.

Le module de l'invention incorpore pour le moins une première source lumineuse 1 permettant de générer un faisceau de type segmenté à projeter via le système optique 2.

L'invention peut participer à une fonction de faisceau code ou éventuellement à un faisceau de route. Le faisceau de route de base a pour fonction d'éclairer sur une large étendue la scène face au véhicule, mais également sur une distance conséquente, typiquement environ deux cents mètres. Ce faisceau lumineux, de par sa fonction d'éclairage, se situe principalement au-dessus de la ligne d'horizon. Il peut présenter un axe optique d'éclairement légèrement ascendant par exemple. Notamment, il peut servir à générer une fonction d'éclairage du type « complément route » qui forme une portion d'un feu de route complémentaire à celle produite par un faisceau de champs proche, le complément route cherchant en totalité ou au moins majoritairement à éclairer au-dessus de la ligne d'horizon alors que le faisceau de champs proche (qui peut présenter les spécificités d'un feu de croisement) cherche à éclairer en totalité ou au moins majoritairement en dessous de la ligne d'horizon.

Le dispositif peut aussi servir à former d'autres fonctions d'éclairage via ou en-dehors de celles décrites précédemment.

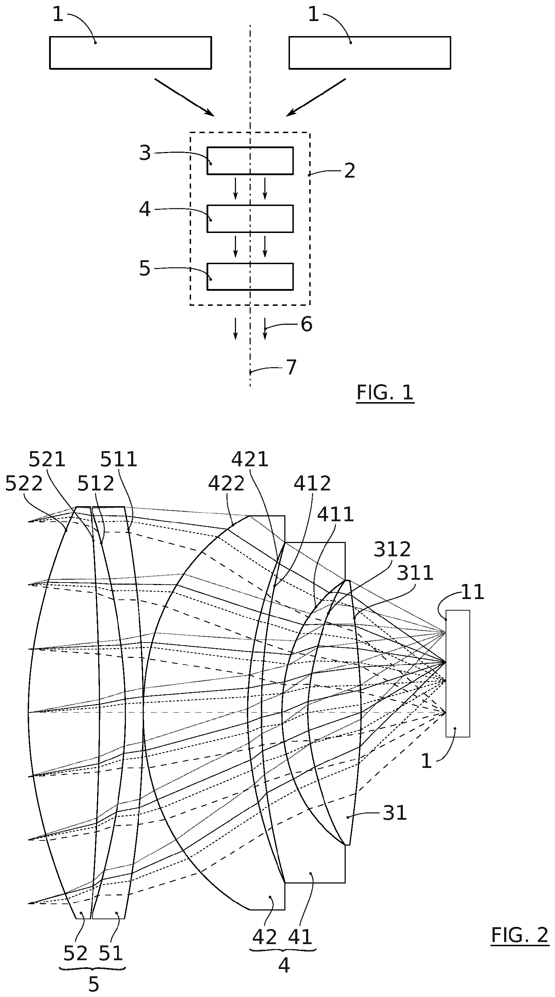

La figure 1 montre une représentation schématique d'un exemple de module avec deux sources lumineuses 1 et un système optique de projection 2 comportant des groupes optiques 3, 4, 5, les rayons lumineux traversant le système 2 permettant de produire un faisceau 6 projeté vers l'avant du module. L'axe optique 7 du système optique est lui aussi schématisé sur la figure 1.

De façon connue en soi, la présente invention peut utiliser des sources lumineuses du type diodes électroluminescentes encore communément appelées LEDs. Il peut éventuellement s'agir de LED(s) organique(s). Notamment, ces LEDs peuvent être dotées d'au moins une puce utilisant la technologie des semi-conducteurs et apte à émettre une lumière. Par ailleurs, le terme source lumineuse s'entend ici d'un ensemble d'au moins une source élémentaire telle une LED apte à produire un flux conduisant à générer en sortie du module de l'invention au moins un faisceau lumineux. Dans un mode avantageux, la face de sortie de la source est de section rectangulaire, ce qui est typique pour des puces à LEDs.

De préférence, la source électroluminescente comprend au moins une matrice d'éléments électroluminescents monolithique, aussi appelée matrice monolithique. Dans une matrice monolithique, les éléments électroluminescents sont crûs depuis un substrat commun et sont connectés électriquement de manière à être activables sélectivement, individuellement ou par sous-ensemble d'éléments électroluminescents. Le substrat peut être majoritairement en matériau semi-conducteur. Le substrat peut comporter un ou plusieurs autres matériaux, par exemple non semi-conducteurs. Ainsi chaque élément électroluminescent ou groupe d'éléments électroluminescents peut former un pixel lumineux et peut émettre de la lumière lorsque son ou leur matériau est alimenté en électricité. La configuration d'une telle matrice monolithique permet l'agencement de pixels activables sélectivement très proches les uns des autres, par rapport aux diodes électroluminescentes classiques destinées à être soudés sur des plaques de circuits imprimés. La matrice monolithique au sens de l'invention comporte des éléments électroluminescents dont une dimension principale d'allongement, à savoir la hauteur, est sensiblement perpendiculaire à un substrat commun, cette hauteur étant au plus égale au micromètre.

Avantageusement, la ou les matrices monolithiques aptes à émettre des rayons lumineux peuvent être couplées à une unité de contrôle de l'émission lumineuse de la source pixélisée. L'unité de contrôle peut ainsi commander (on peut également dire piloter) la génération et/ou la projection d'un faisceau lumineux pixélisé par le dispositif lumineux. L'unité de contrôle peut être intégrée au dispositif lumineux. L'unité de contrôle peut être montée sur une ou plusieurs des matrices, l'ensemble formant ainsi un module lumineux. L'unité de contrôle peut comporter une unité centrale de traitement couplée avec une mémoire sur laquelle est stockée un programme d'ordinateur qui comprend des instructions permettant au processeur de réaliser des étapes générant des signaux permettant le contrôle de la source lumineuse. L'unité de contrôle peut ainsi par exemple contrôler individuellement l'émission lumineuse de chaque pixel d'une matrice. En outre, la luminance obtenue par la pluralité d'éléments électroluminescents est d'au moins 60Cd/mm², de préférence d'au moins 80Cd/mm².

L'unité de contrôle peut former un dispositif électronique apte à commander les éléments électroluminescents. L'unité de contrôle peut être un circuit intégré. Un circuit intégré, encore appelé puce électronique, est un composant électronique reproduisant une ou plusieurs fonctions électroniques et pouvant intégrer plusieurs types de composants électroniques de base, par exemple dans un volume réduit (i.e. sur une petite plaque). Cela rend le circuit facile à mettre en œuvre. Le circuit intégré peut être par exemple un ASIC ou un ASSP. Un ASIC (acronyme de l'anglais « Application-Specific Integrated Circuit ») est un circuit intégré développé pour au moins une application spécifique (c'est-à-dire pour un client). Un ASIC est donc un circuit intégré (micro-électronique) spécialisé. En général, il regroupe un grand nombre de fonctionnalités uniques ou sur mesure. Un ASSP (acronyme de l'anglais « Application Specific Standard Product ») est un circuit électronique intégré (micro-électronique) regroupant un grand nombre de fonctionnalités pour satisfaire à une application généralement standardisée. Un ASIC est conçu pour un besoin plus particulier (spécifique) qu'un ASSP. L'alimentation en électricité des matrices monolithiques est réalisée via le dispositif électronique, lui-même alimenté en électricité à l'aide par exemple d'au moins connecteur le reliant à une source d'électricité. La source d'électricité peut être interne ou externe au dispositif selon l'invention. Le dispositif électronique alimente la source lumineuse en électricité. Le dispositif électronique est ainsi apte à commander la source lumineuse.

Selon l'invention, la source de lumière comprend de préférence au moins une matrice monolithique dont les éléments électroluminescents s'étendent en saillie d'un substrat commun à partir duquel ils ont crû respectivement. Différents agencements d'éléments électroluminescents peuvent répondre à cette définition de matrice monolithique, dès lors que les éléments électroluminescents présentent l'une de leurs dimensions principales d'allongement sensiblement perpendiculaire à un substrat commun et que l'écartement entre les pixels, formés par un ou plusieurs éléments électroluminescents regroupés ensemble électriquement, est faible en comparaison des écartements imposés dans des agencements connus de chips carrés plates soudés sur une carte de circuits imprimés.

Notamment la source de lumière selon un aspect de l'invention peut comporter une pluralité d'éléments électroluminescents distincts des autres et que l'on fait croitre individuellement depuis le substrat, en étant connectés électriquement pour être activables sélectivement, le cas échéant par sous-ensembles au sein desquels des bâtonnets peuvent être activés simultanément.

Selon un mode de réalisation non représenté, la matrice monolithique comprend une pluralité d'éléments électroluminescents, de dimensions submillimétriques, qui sont agencés en saillie d'un substrat de manière à former des bâtonnets de section hexagonale. Les bâtonnets électroluminescents s'étendent parallèlement à l'axe optique du module lumineux quand la source de lumière est en position dans le boîtier.

Ces bâtonnets électroluminescents sont regroupés, notamment par des connexions électriques propres à chaque ensemble, en une pluralité de portions activables sélectivement. Les bâtonnets électroluminescents prennent naissance sur une première face d'un substrat. Chaque bâtonnet électroluminescent, ici formé par utilisation de nitrure de gallium (GaN), s'étend perpendiculairement, ou sensiblement perpendiculairement, en saillie du substrat, ici réalisé à base de silicium, d'autres matériaux comme du carbure de silicium pouvant être utilisés sans sortir du contexte de l'invention. A titre d'exemple, les bâtonnets électroluminescents pourraient être réalisés à partir d'un alliage de nitrure d'aluminium et de nitrure de gallium (AlGaN), ou à partir d'un alliage de phosphures d'aluminium, d'indium et de gallium (AlInGaP). Chaque bâtonnet électroluminescent s'étend selon un axe d'allongement définissant sa hauteur, la base de chaque bâtonnet étant disposée dans un plan de la face supérieure du substrat.

Les bâtonnets électroluminescents d'une même matrice monolithique présentent avantageusement la même forme et les mêmes dimensions. Ils sont chacun délimités par une face terminale et par une paroi circonférentielle qui s'étend le long de l'axe d'allongement du bâtonnet. Lorsque les bâtonnets électroluminescents sont dopés et font l'objet d'une polarisation, la lumière résultante en sortie de la source à semi-conducteurs est émise essentiellement à partir de la paroi circonférentielle, étant entendu que des rayons lumineux peuvent sortir également de la face terminale. Il en résulte que chaque bâtonnet électroluminescent agit comme une unique diode électroluminescente et que la luminance de cette source est améliorée d'une part par la densité des bâtonnets électroluminescents présents et d'autre part par la taille de la surface éclairante définie par la paroi circonférentielle et qui s'étend donc sur tout le pourtour, et toute la hauteur, du bâtonnet. La hauteur d'un bâtonnet peut être comprise entre 2 et 10 µm, préférentiellement 8 µm; la plus grande dimension de la face terminale d'un bâtonnet est inférieure à 2 µm, préférentiellement inférieure ou égale à 1 µm.

On comprend que, lors de la formation des bâtonnets électroluminescents, la hauteur peut être modifiée d'une zone de la source de lumière à l'autre, de manière à accroitre la luminance de la zone correspondante lorsque la hauteur moyenne des bâtonnets la constituant est augmentée. Ainsi, un groupe de bâtonnets électroluminescents peut avoir une hauteur, ou des hauteurs, différentes d'un autre groupe de bâtonnets électroluminescents, ces deux groupes étant constitutifs de la même source de lumière à semi-conducteur comprenant des bâtonnets électroluminescents de dimensions submillimétriques. La forme des bâtonnets électroluminescents peut également varier d'une matrice monolithique à l'autre, notamment sur la section des bâtonnets et sur la forme de la face terminale. Les bâtonnets présentent une forme générale cylindrique, et ils peuvent notamment présenter une forme de section polygonale, et plus particulièrement hexagonale. On comprend qu'il importe que de la lumière puisse être émise à travers la paroi circonférentielle, que celle-ci présente une forme polygonale ou circulaire.

Par ailleurs, la face terminale peut présenter une forme sensiblement plane et perpendiculaire à la paroi circonférentielle, de sorte qu'elle s'étend sensiblement parallèlement à la face supérieure du substrat, ou bien elle peut présenter une forme bombée ou en pointe en son centre, de manière à multiplier les directions d'émission de la lumière sortant de cette face terminale.

Les bâtonnets électroluminescents sont agencés en matrice à deux dimensions. Cet agencement pourrait être tel que les bâtonnets soient agencés en quinconce. De manière générale, les bâtonnets sont disposés à intervalles réguliers sur le substrat et la distance de séparation de deux bâtonnets électroluminescents immédiatement adjacents, dans chacune des dimensions de la matrice, doit être au minimum égale à 2 µm, préférentiellement compris entre 3 µm et 10 µm, afin que la lumière émise par la paroi circonférentielle de chaque bâtonnet puisse sortir de la matrice de bâtonnets électroluminescents. Par ailleurs, on prévoit que ces distances de séparation, mesurées entre deux axes d'allongement de bâtonnets adjacents, ne soient pas supérieures à 100 µm.

Selon un autre mode de réalisation non représenté, la matrice monolithique peut comporter des éléments électroluminescents formés par des couches d'éléments électroluminescents épitaxiées, notamment une première couche en GaN dopée n et une seconde couche en GaN dopée p, sur un substrat unique, par exemple en carbure de silicium, et que l'on découpe (par meulage et/ou ablation) pour former une pluralité de pixels respectivement issus d'un même substrat. Il résulte d'une telle conception une pluralité de blocs électroluminescents tous issus d'un même substrat et connectés électriquement pour être activables sélectivement les uns des autres.

Dans un exemple de réalisation selon cet autre mode, le substrat de la matrice monolithique peut présenter une épaisseur comprise entre 100 µm et 800 µm, notamment égale à 200 µm ; chaque bloc peut présenter une largeur et largeur, chacune étant comprise entre 50 µm et 500 µm, préférentiellement comprise entre 100 µm et 200 µm. Dans une variante, la longueur et la largeur sont égales. La hauteur de chaque bloc est inférieur à 500 µm, préférentiellement inférieur à 300 µm. Enfin la surface de sortie de chaque bloc peut être faite via le substrat du côté opposée à l'épitaxie. La distance de séparation entre deux pixels. La distance des pixels contigus peut être inférieure à 1 µm, notamment inférieure à 500 µm, et elle est préférentiellement inférieure à 200 µm.

Concernant les puces monolithiques à blocs électroluminescents :
- Le nombre de pixels peut être compris entre 250 et plusieurs milliers. Une valeur typique se situant autour du millier de pixels.
- Leur forme globale est usuellement carrée, et peut aussi être rectangulaire. Ratio de forme généralement compris entre 1:1 et 1:5.
- La taille d'un pixel unitaire (carré dans tous les cas connus, peut-être rectangulaire) est entre 100 et 300 µm dans l'état de l'art actuel.

Selon un autre mode de réalisation non représenté, aussi bien avec des bâtonnets électroluminescents s'étendant respectivement en saillie d'un même substrat, tels que décrit ci-dessus, qu'avec des blocs électroluminescents obtenus par découpage de couches électroluminescentes superposées sur un même substrat, la matrice monolithique peut comporter en outre une couche d'un matériau polymère dans laquelle les éléments électroluminescents sont au moins partiellement noyés. La couche peut ainsi s'étendre sur toute l'étendue du substrat ou seulement autour d'un groupe déterminé d'éléments électroluminescents. Le matériau polymère, qui peut notamment être à base de silicone, crée une couche protectrice qui permet de protéger les éléments électroluminescents sans gêner la diffusion des rayons lumineux. En outre, il est possible d'intégrer dans cette couche de matériau polymère des moyens de conversion de longueur d'onde, et par exemple des luminophores, aptes à absorber au moins une partie des rayons émis par l'un des éléments et à convertir au moins une partie de ladite lumière d'excitation absorbée en une lumière d'émission ayant une longueur d'onde différente de celle de la lumière d'excitation. On pourra prévoir indifféremment que les luminophores sont noyés dans la masse du matériau polymère, ou bien qu'ils sont disposés en surface de la couche de ce matériau polymère. La source de lumière peut comporter en outre un revêtement de matériau réfléchissant pour dévier les rayons lumineux vers les surfaces de sorties de la source pixélisée.

Les éléments électroluminescents de dimensions submillimétriques définissent dans un plan, sensiblement parallèle au substrat, une surface de sortie déterminée. On comprend que la forme de cette surface de sortie est définie en fonction du nombre et de l'agencement des éléments électroluminescents qui la composent. On peut ainsi définir une forme sensiblement rectangulaire de la surface d'émission, étant entendu que celle-ci peut varier et prendre n'importe quelle forme sans sortir du contexte de l'invention.

Dans le mode de réalisation de la figure 1, deux sources 1 sont employées et elles sont espacées relativement à l'axe optique 7 du système optique 2, de la lumière issue de chacune des sources 1 entrant simultanément dans le système 2 par son dioptre d'entrée, dans le groupe d'entrée 3.

De manière surprenante, l'association de trois groupes de lentilles dans le système 2 assurent à la fois une projection de champ large et une qualité optique satisfaisant les exigences dans le domaine des fonctions d'éclairage, et en particulier pour les fonctions de feu de route, et encore plus précisément notamment pour des fonctions du type faisceau de route adaptatif exigeant la capacité de passer efficacement (c'est-à-dire sur une distance angulaire faible, notamment plus faible que la taille angulaire de l'image de trois, ou de préférence de deux sources élémentaires contiguës) d'une zone éclairée à une zone sombre non éblouissante (c'est à dire notamment avec des intensités rayonnées par le système dans cette zone inférieures à 625Cd) au sein du faisceau global, le tout en limitant le chromatisme. Une description de chaque groupe optique suit. De préférence, les lentilles employées ont une section transversale (perpendiculaire à l'axe optique) circulaire. Elles sont de préférence en verre. Une lentille peut, en tant que telle, être formée à partir de plusieurs sous lentilles de même matière assemblées, notamment par collage ; on peut par exemple réunir deux sous lentilles plan convexe pour former une lentille biconvexe.

Le groupe optique d'entrée 3 peut être formé d'une seule lentille ou, alternativement, par une paire de lentilles.

Le premier cas est représenté à la figure 2 avec une lentille biconvexe 31 de type asphérique. De préférence, le type de verre employé est différent pour cette lentille et la lentille qui la suit ; il pourra s'agir d'une lentille en verre Crown. L'emploi d'une lentille asphérique permet d'améliorer la réponse impulsionnelle du système pour les directions voisines du bord du champ éclairé, avec une modification progressive de la courbure de la lentille, en particulier au niveau de son dioptre de sortie : en allant vers la périphérie de la lentille, on passe par exemple d'une zone de rayon de courbure principale à une zone ne traitant que des rayons du champ latéral, avec une courbure différente, de préférence moindre que la courbure principale ; une zone intermédiaire entre les deux zones précédentes peut être formée pour traiter des rayons moins extrêmes. D'une manière générale, il faut retenir que le dioptre de sortie de la lentille 31 peut présenter une courbure variable vers sa périphérie, et notamment une zone périphérique de courbure décroissante. Cette zone peut couvrir moins de 10 % du diamètre de la lentille. Un résultat équivalent est obtenu, de manière alternative, avec un dioptre d'entrée asphérique, par exemple suivant le profil décrit ci-dessus dans le cas du dioptre de sortie.

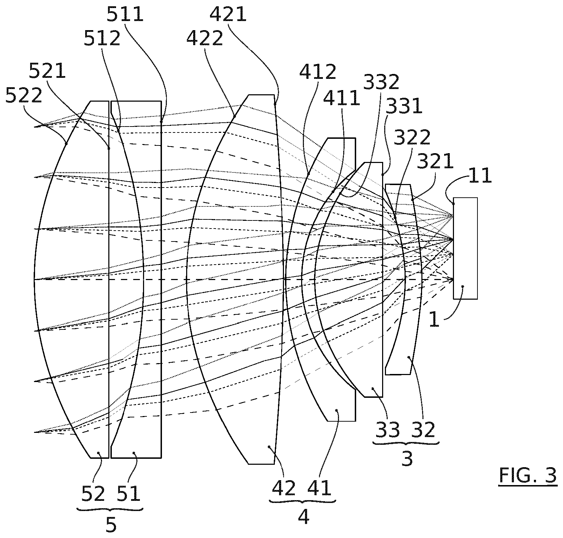

Une réalisation alternative du groupe d'entrée 3 ressort de la figure 3 avec une configuration à deux lentilles, cette fois sphériques. Dans cet exemple, une lentille 32 comprenant le dioptre d'entrée du système comprend une face 321 convexe et une face opposée 322 concave. Elle est suivie d'une lentille 33 présentant un dioptre d'entrée 331 plan et un dioptre de sortie 332 convexe. Comme indiqué précédemment, il est avantageux que les types de verre employés pour les deux lentilles soient différents. Par exemple, la lentille 32 peut-être en verre Flint et la lentille 33 en verre Crown.

En revenant au mode de réalisation de la figure 2, le groupe optique intermédiaire 4 suivant le groupe optique d'entrée 3 est composé d'une première lentille 41 et d'une deuxième lentille 42. On comprend que le dioptre d'entrée 411 de la lentille 41 reçoit les rayons depuis le groupe d'entrée 3. Les dioptres 412 et 421 sont quant à eux en vis-à-vis, et le dioptre 422 émet les rayons lumineux en direction du groupe de sortie 5. La lentille 41 est ici de type ménisque avec une face 411 formant la cavité du ménisque et une face opposée, 412 convexe, l'ensemble étant de préférence sphérique. La lentille 42 est dans le cas représenté une lentille concave convexe, la surface convexe formant le dioptre de sortie 422. Le dioptre 421 peut alternativement être convexe comme c'est le cas sur le mode de réalisation de la figure 3. Comme pour le premier groupe, il est avantageux de poursuivre l'alternance des types de verre dans ce deuxième groupe 4.
L'association des lentilles 41 et 42 est configurée pour former un doublet du type doublet de Gauss.

Dans un mode de réalisation non illustré, le groupe intermédiaire 4 est une paire de lentilles remplaçant la lentille 42 ; on peut notamment utiliser deux lentilles concaves convexes se suivant, la convexité d'une lentille amont étant suivie par la face concave de la lentille aval. Les faces concaves peut-être de rayon de courbure infinie, c'est-à-dire planes.

Le troisième groupe est le groupe optique de sortie 5. Les modes de réalisation des figures 2 et 3 illustrent des dispositions identiques pour ce groupe. En particulier, il est composé d'une troisième lentille 51 (s'inscrivant à la suite de la deuxième lentille 42 précédemment décrite) et d'une quatrième lentille 52 suivant la troisième lentille 51. La lentille 51 est du type ménisque avec un dioptre d'entrée 511 convexe et une cavité de ménisque formant le dioptre de sortie 512. La lentille 52 comprend un dioptre d'entrée 521 du type convexe ou plan et un dioptre de sortie 522 convexe. Cette dernière portion forme la sortie de l'ensemble du système de projection 2. L'association des lentilles 51 et 52 est configurée pour former un doublet de type doublet de Fraunhofer.

On donne ci-après des exemples de type de verre et de géométrie de lentilles correspondant au mode de réalisation de la figure 3, sans pour autant qu'il soit absolument nécessaire d'utiliser ces exemples en stricte combinaison (la référence au type de matériaux est donnée selon la classification SCHOTT^{®} ; le diamètre des plus grandes lentilles est de préférence de l'ordre de 40 mm):
- lentille 32 :
   ∘ verre Flint N-LAF2
   ∘ face 321 convexe sphérique de rayon de convexité égal à 40, mm
   ∘ face 322 en qualité de ménisque sphérique de rayon égal à 21,254 mm
- lentille 33 :
   ∘ verre Crown du type N-LAK10
   ∘ face 331 plane
   ∘ face 332 convexe sphérique de rayon de convexité égale à 16,597 mm
- lentille 41 :
   ∘ verre Flint du type N-SF6
   ∘ face 411 formant un ménisque sphérique de rayon égal à 14,398 mm
   ∘ face 412 convexe sphérique de rayon de convexité égal à 25,332 mm
- lentille 42 :
   ∘ verre Crown du type N-LAK10
   ∘ face 421 convexe sphérique de rayon de convexité égal à 163,091 mm
   ∘ face 422 convexe sphérique de rayon de convexité égal à 30,557 mm
- lentille 51 :
   ∘ verre Flint du type N-SF6
   ∘ face 511 plane
   ∘ face 522 concave sphérique de rayon de concavité égale à 42,48 mm
- lentille 52 :
   ∘ verre Crown du type N-LAK10
   ∘ face 521 plane
   ∘ face 522 convexe sphérique de rayon de convexité égal à 31,645 mm
Le système optique selon cet exemple a un nombre d'ouverture N=0,75, également noté f/0,75 ou 1:0,75, et son encombrement selon l'axe optique est de moins de 55 mm.

L'invention n'est pas limitée aux modes de réalisation décrits mais à l'étendue des revendications jointes.

### REFERENCES

- 1.: Source lumineuse
11. Face d'émission
- 2.: Dispositif optique de projection
- 3.: Groupe optique d'entrée
31. Lentille asphérique
311. Dioptre d'entrée
312. Dioptre de sortie
32. Lentille amont
321. Dioptre d'entrée
322. Dioptre de sortie
33. Lentille aval
331. Dioptre d'entrée
332. Dioptre de sortie
- 4.: Groupe optique intermédiaire
41. Première lentille
411. Dioptre d'entrée
412. Dioptre de sortie
42. Deuxième lentille
421. Dioptre d'entrée
422. Dioptre de sortie
- 5.: Groupe optique de sortie
51. Troisième lentille
511. Dioptre d'entrée
512. Dioptre de sortie
52. Quatrième lentille
521. Dioptre d'entrée
522. Dioptre de sortie
- 6.: Faisceau lumineux de sortie
- 7.: Axe optique

## Revendications

1. Système optique de projection (2) de module d'éclairage de véhicule, **caractérisé en ce qu'**il consiste en :
- un groupe optique d'entrée (3) comprenant au moins une lentille, apte à recevoir des rayons lumineux issus d'une source lumineuse et à les faire converger, ledit groupe optique d'entrée (3) consiste soit en une lentille (31) pourvue d'un dioptre d'entrée (311) ou d'un dioptre de sortie (312) asphérique soit en deux lentilles sphériques (32,33) ;
- un groupe optique intermédiaire (4) qui consiste en une première lentille (41) de type ménisque, recevant directement des rayons lumineux depuis le groupe optique d'entrée (3), et en une deuxième lentille (42) présentant un dioptre de sortie (422) convexe, la cavité de ménisque de la première lentille (41) étant orientée à l'opposé de la deuxième lentille (42);
- un groupe optique de sortie (5) qui consiste en une troisième lentille (51) de type ménisque, recevant directement des rayons lumineux depuis le groupe optique intermédiaire (4), et en une quatrième lentille (52) biconvexe ou plan convexe dont le dioptre plan est tourné vers la troisième lentille (51), la cavité de ménisque de la troisième lentille (51) étant orientée vers la quatrième lentille (52).

2. Système optique de projection (2) selon l'une des revendications précédentes, dans lequel le dioptre d'entrée (311) du groupe optique d'entrée (3) est convexe.

3. Système optique de projection (2) selon l'une des revendications précédentes, dans lequel le dioptre d'entrée de la deuxième lentille (42) est convexe, concave ou plan, ou dans lequel la deuxième lentille (42) est un ménisque.

4. Système optique de projection selon l'une des revendications précédentes, dans lequel le dioptre d'entrée de la deuxième lentille (42) présente un rayon de courbure plus grand que celui du dioptre de sortie (422) de la deuxième lentille (42).

5. Système optique de projection (2) selon l'une des revendications précédentes, dans lequel la première lentille (41) est en verre Flint.

6. Système optique de projection (2) selon l'une des revendications précédentes, dans lequel la deuxième lentille (42) est en verre Crown.

7. Système optique de projection (2) selon l'une des revendications précédentes, dans lequel la troisième lentille (51) est en verre Flint.

8. Système optique de projection (2) selon l'une des revendications précédentes, dans lequel la quatrième lentille (52) est en verre Crown.

9. Système optique de projection (2) selon l'une des revendications précédentes, dans lequel les lentilles du groupe optique intermédiaire (4) et du groupe optique de sortie (5) présentent toutes des dioptres sphériques.

10. Module d'éclairage automobile comprenant une source lumineuse (1) et un système optique de projection (2) selon l'une des revendications précédentes et qui est configuré pour produire un faisceau lumineux de sortie (6), émis par un dioptre de sortie (512) du groupe optique de sortie (5), à partir de lumière issue de l'au moins une source lumineuse (1) et entrant directement dans le système optique de projection (2).

11. Module selon la revendication précédente, comprenant au moins une autre source lumineuse (1) associée au système optique de projection (2) pour produire le faisceau lumineux de sortie (6).

12. Module selon la revendication précédente, dans lequel les sources lumineuses (1) sont espacées symétriquement autour d'un axe optique (7) du système optique de projection (2).

13. Module selon l'une des revendications 10 à 12, configuré pour que la netteté maximale du faisceau projeté soit située entre le milieu et les deux tiers d'un secteur angulaire de projection horizontale au niveau de l'axe optique.

## Patentansprüche

1. Optisches Projektionssystem (2) eines Fahrzeugbeleuchtungsmoduls, **dadurch gekennzeichnet, dass** es besteht aus:
- einer optischen Eingangsgruppe (3), die mindestens eine Linse umfasst, die geeignet ist, Lichtstrahlen aus einer Lichtquelle zu empfangen und sie zu bündeln, wobei die optische Eingangsgruppe (3) entweder aus einer Linse (31) mit einer asphärischen Eintrittsfläche (311) oder einer asphärischen Austrittsfläche (312) oder aus zwei sphärischen Linsen (32,33) besteht;
- einer optischen Zwischengruppe (4), die aus einer ersten Linse (41) vom Meniskustyp, die direkt Lichtstrahlen von der optischen Eingangsgruppe (3) empfängt, und aus einer zweiten Linse (42) mit einer konvexen Austrittsfläche (422) besteht, wobei die Meniskushöhlung der ersten Linse (41) in entgegengesetzter Richtung zur zweiten Linse (42) orientiert ist;
- einer optischen Ausgangsgruppe (5), die aus einer dritten Linse (51) vom Meniskustyp, die direkt Lichtstrahlen von der optischen Zwischengruppe (4) empfängt, und aus einer vierten bikonvexen oder plankonvexen Linse (52) besteht, deren plane Fläche zur dritten Linse (51) gerichtet ist, wobei die Meniskushöhlung der dritten Linse (51) zur vierten Linse (52) hin orientiert ist.

2. Optisches Projektionssystem (2) nach einem der vorhergehenden Ansprüche, bei dem die Eintrittsfläche (311) der optischen Eingangsgruppe (3) konvex ist.

3. Optisches Projektionssystem (2) nach einem der vorhergehenden Ansprüche, bei dem die Eintrittsfläche der zweiten Linse (42) konvex, konkav oder plan ist, oder bei dem die zweite Linse (42) ein Meniskus ist.

4. Optisches Projektionssystem nach einem der vorhergehenden Ansprüche, bei dem die Eintrittsfläche der zweiten Linse (42) einen größeren Krümmungsradius aufweist als die Austrittsfläche (422) der zweiten Linse (42).

5. Optisches Projektionssystem (2) nach einem der vorhergehenden Ansprüche, bei dem die erste Linse (41) aus Flintglas besteht.

6. Optisches Projektionssystem (2) nach einem der vorhergehenden Ansprüche, bei dem die zweite Linse (42) aus Kronglas besteht.

7. Optisches Projektionssystem (2) nach einem der vorhergehenden Ansprüche, bei dem die dritte Linse (51) aus Flintglas besteht.

8. Optisches Projektionssystem (2) nach einem der vorhergehenden Ansprüche, bei dem die vierte Linse (52) aus Kronglas besteht.

9. Optisches Projektionssystem (2) nach einem der vorhergehenden Ansprüche, bei dem die Linsen der optischen Zwischengruppe (4) und der optischen Ausgangsgruppe (5) alle sphärische Flächen aufweisen.

10. Automobilbeleuchtungsmodul, umfassend eine Lichtquelle (1) und ein optisches Projektionssystem (2) nach einem der vorhergehenden Ansprüche, das konfiguriert ist, um einen Ausgangslichtstrahls (6) zu erzeugen, der von einer Austrittsfläche (512) der optischen Ausgangsgruppe (5) ausgesendet wird, aus Licht, das von der mindestens einen Lichtquelle (1) stammt und direkt in das optische Projektionssystem (2) eintritt.

11. Modul nach dem vorhergehenden Anspruch, umfassend mindestens eine weitere Lichtquelle (1), die mit dem optischen Projektionssystem (2) verbunden ist, um den Ausgangslichtstrahls (6) zu erzeugen.

12. Modul nach dem vorhergehenden Anspruch, bei dem die Lichtquellen (1) symmetrisch um eine optische Achse (7) des optischen Projektionssystems (2) angeordnet sind.

13. Modul nach einem der Ansprüche 10 bis 12, das so konfiguriert ist, dass die maximale Schärfe des projizierten Strahls zwischen der Mitte und zwei Dritteln eines horizontalen Projektionswinkelsektors auf Höhe der optischen Achse liegt.

## Claims

1. Optical projection system (2) of a vehicle lighting module, **characterized in that** it consists of:
- an input optical group (3) comprising at least one lens, capable of receiving light rays from a light source and making them converge, said input optical group (3) consists either of a lens (31) provided with an aspherical input diopter (311) or an aspherical output diopter (312) or of two spherical lenses (32,33);
- an intermediate optical group (4) which consists of a first meniscus-type lens (41), directly receiving light rays from the input optical group (3), and a second lens (42) having a convex output diopter (422), the meniscus cavity of the first lens (41) being oriented away from the second lens (42);
- an output optical group (5) which consists of a third meniscus-type lens (51), directly receiving light rays from the intermediate optical group (4), and a fourth biconvex or plano-convex lens (52) whose plane diopter is turned toward the third lens (51), the meniscus cavity of the third lens (51) being oriented toward the fourth lens (52).

2. Optical projection system (2) according to one of the preceding claims, in which the input diopter (311) of the input optical group (3) is convex.

3. Optical projection system (2) according to one of the preceding claims, in which the input diopter of the second lens (42) is convex, concave or plane, or in which the second lens (42) is a meniscus.

4. Optical projection system according to one of the preceding claims, in which the input diopter of the second lens (42) has a radius of curvature greater than that of the output diopter (422) of the second lens (42).

5. Optical projection system (2) according to one of the preceding claims, in which the first lens (41) is made of Flint glass.

6. Optical projection system (2) according to one of the preceding claims, in which the second lens (42) is made of Crown glass.

7. Optical projection system (2) according to one of the preceding claims, in which the third lens (51) is made of Flint glass.

8. Optical projection system (2) according to one of the preceding claims, in which the fourth lens (52) is made of Crown glass.

9. Optical projection system (2) according to one of the preceding claims, in which the lenses of the intermediate optical group (4) and the output optical group (5) all have spherical diopters.

10. Automotive lighting module comprising a light source (1) and an optical projection system (2) according to one of the preceding claims and which is configured to produce an output light beam (6), emitted by an output diopter (512) of the output optical group (5), from light from the at least one light source (1) and entering directly into the optical projection system (2).

11. Module according to the preceding claim, comprising at least one other light source (1) associated with the optical projection system (2) to produce the output light beam (6).

12. Module according to the preceding claim, in which the light sources (1) are symmetrically spaced around an optical axis (7) of the optical projection system (2).

13. Module according to one of claims 10 to 12, configured so that the maximum sharpness of the projected beam is located between the middle and two-thirds of a horizontal projection angular sector at the level of the optical axis.
